Europäisches Patentamt

(19) European Patent Office

Office européen des brevets

(11) Publication number: **0 070 256**
**B1**

(12) ## EUROPEAN PATENT SPECIFICATION

(45) Date of publication of patent specification: **23.10.85**

(51) Int. Cl.⁴: **B 23 Q 39/04,** B 23 Q 1/16, B 23 B 9/12

(21) Application number: **82810296.2**

(22) Date of filing: **09.07.82**

(54) **Mechanism to control the rotation of parts-carrying bodies in automatic machines with revolving table.**

(30) Priority: **10.07.81 CH 4525/81**

(43) Date of publication of application:
**19.01.83 Bulletin 83/03**

(45) Publication of the grant of the patent:
**23.10.85 Bulletin 85/43**

(84) Designated Contracting States:
**AT BE DE FR GB IT LU NL SE**

(56) References cited:
**CH-A- 154 729**
**US-A-2 086 847**
**US-A-2 086 852**
**US-A-2 259 948**
**US-A-3 324 742**

(73) Proprietor: **Azypatent AG**
**FL-9490 Vaduz (LI)**

(72) Inventor: **Mandozzi, Aldo, Dr.**
**CH-6951 Ponte Capriasca (CH)**

(74) Representative: **Baggiolini, Raimondo et al**
**Racheli & Fiammenghi Via San Gottardo 15**
**CH-6900 Lugano (CH)**

Courier Press, Leamington Spa, England.

## Description

The object of the invention is a mechanism for the control of the rotation of parts-carrying bodies in automatic machines with revolving table.

It is known that, in working small parts (work pieces) on transfer machines, certain work processes turn out to be more economical and accurate if we rotate the part (piece) (typical turning operations) instead of the tool. Besides, by rotating the piece, we automatically achieve concentricity in various diameters.

According to the US—A—2086847 and US—A—3.324.742 it is possible to rotate the piece (part) into a certain number of positions and to hold it firm in those positions where the work process requires the part to be held firm.

Said known mechanisms comprise:

a first toothing made in the proximity of the periphery of the parts-carrying table, below it and in one piece with it;

a second toothing arranged along the periphery of each parts-carrying body and in one piece with it;

an intermediate toothed wheel, idling on its shaft and arranged between the first toothing and the second toothing of each parts-carrying body, the intermediate wheel constantly engaging with the first toothing of the rotatable table, but shiftable axially so as to be able to become engaged and disengaged from the second toothing when the parts-carrying body must rotate, or must remain fixed in position;

the axial shifting of said toothed intermediate wheel is achieved by making its pivot (axis) translate axially from an indexed position of engagement to an indexed position of non-engagements;

a third toothing similar to the first one, made in the proximity of the periphery of the parts-carrying table and below it and controlling a synchronization device which makes it possible to set in motion each fixed parts-carrying body to be able to couple its second toothing to the first one when said parts-carrying body must be made to rotate.

The mechanism according to the present invention is characterized by the fact that said synchronization device comprises the following:

an upper toothed wheel, identical to the intermediate idling wheel, engaging with said toothing and connected by means of a first vertical small shaft, to a lower toothed wheel, engaging in turn with a lower toothed wheel of a second parallel small shaft which is coaxial with respect to the parts-carrying body, a second small shaft carrying at its top a cone so made as to be friction-inserted in a complementary conical cavity made underneath the parts-carrying body, a cone receiving the motion of the lower toothed wheel through a single-directional joint;

at the base of the two small shafts there is arranged a lever system activated by a cam and a tappet to bring about the insertion or disinsertion (extraction) of the cone from the above-mentioned complementary cavity;

the end of said lever system under the first small shaft is connected to a toggle joint which is activated by an electromagnet to bring about the lifting of said first shaft and thus the translation of the axis of the intermediate wheel from its indexed position of non-engagement to the indexed position of engagement, when the speed of the parts-carrying body is close to that of synchronism.

For greater clarification, the attached drawings show the following:

In Figure 1, the axial cross-section of the mechanism involved, going through the axis of a parts-carrying body but excluding the synchronization device and with the pivot (axis) in the engagement position indicated (adjusted);

In Figure 2, the same axial cross-section of the above-mentioned mechanism with the synchronization device, with the axis in the indicated position of non-engagement and with the friction cone detached (disconnected) from the respective complementary conical seat.

In Figure 3, the same axial cross-section as in Figure 2, with the friction cone inserted in the respective complementary conical seat.

In Figure 4, the partial transversal cross-section of the parts-carrying table made in correspondence to the first and second toothing.

With reference to the various figures:

The toothed crown, which we shall call "first toothing" 2, placed under revolving table 1, rotates constantly and through the toothed wheel 3, idling on its axis, engages with the toothing 16 which we will call "second toothing" of the parts-carrying body 13, thus causing it to rotate.

Parts-carrying body 13 is guided by roller bearings 14 in revolving table 1.

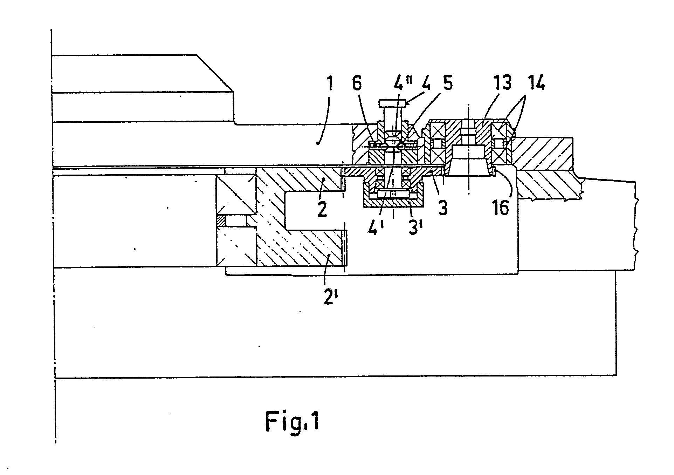

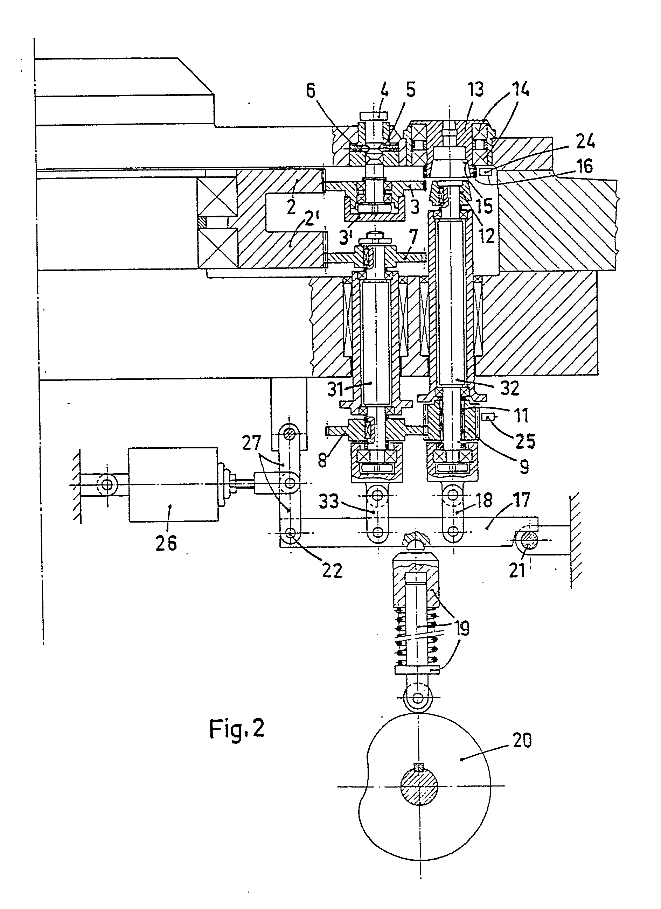

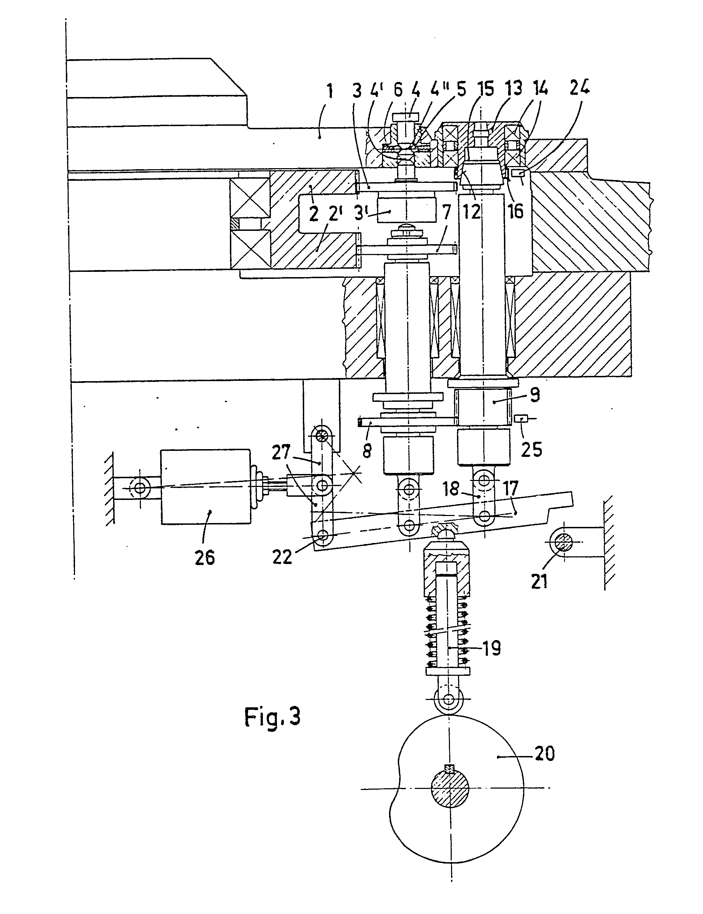

The axis 4 of the idling toothed wheel 3, with the support of the sphere 5 and the springs 6, acts as index (setting) device and can assume two positions: the first one, indicated in Figure 1, is the position of engagement, the second one, indicated in Figures 2 and 3, is the position of non-engagement of the toothed wheel 2 with the second toothing 16.

In the positions in which the part (piece) must be fixed, the idling wheel 3 as a matter of fact is pushed down by means of axis (pivot) 4 which is thus adjusted in the lower position (Figure 2).

In this position, the teeth 16 of the pincers-carrying body 13 do not engage with wheel 3. It is obvious, that, to make the parts-carrying body 13 rotate, before engaging the wheel 3 with teeth 16, the parts-carrying body itself must be made to rotate so that the peripheral speed of the teeth 16 and of the wheel 3 will be roughly equal.

For this purpose we have provided one or more synchronization devices (2), depending upon the work cycle.

We obviously try to set the work cycle up in such a manner as to regroup the operations that require the part to be rotating so as to use only one synchronization device, which comprises the following:

The toothed crown 2' which we shall call "third toothing", in one piece with the toothed crown 2, which engages with the upper toothed wheel 7. The latter is one piece - through the first small vertical shaft 31 — with the lower toothed wheel which, in turn, engages with the lower toothed wheel 9 of the second small shaft 32 which is parallel to the first one. The lower toothed wheel 9 is connected, by means of the single-directional joint 11, to the cone 12, so made as to be friction-inserted in the complementary conical cavity 15 of the parts-carrying body 13.

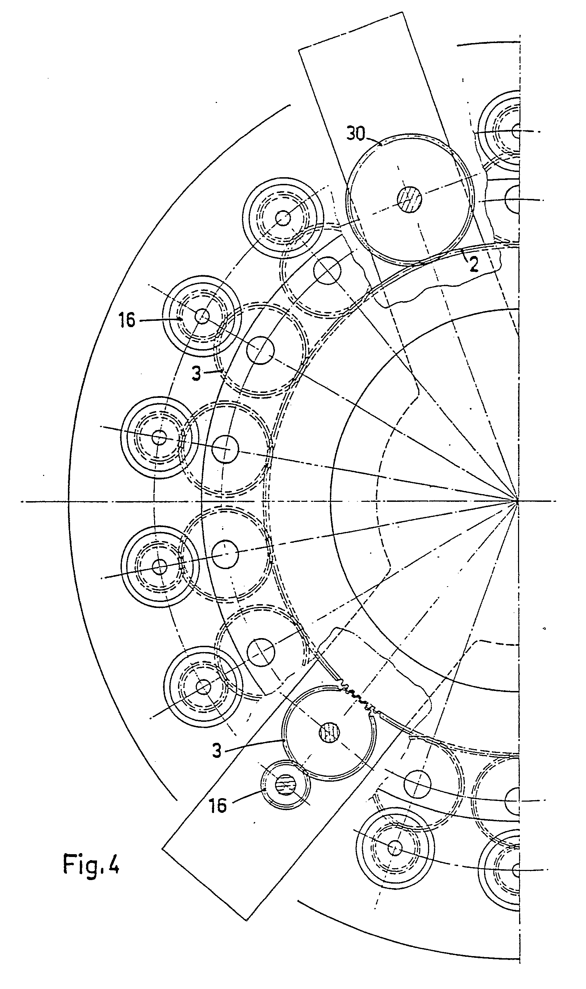

The entire device is constantly in rotation, controlled by toothings 2', 2, which in turn are controlled by a motor through the toothed wheel 30 (Figure 4).

Synchronization takes place as follows:

By means of the flexible tappet 19, cam 20 raises lever 17 which moves away from the stop 21, making a pivot (pivoting) on axis 22 (see Figure 3).

By means of the intermediate lever 18, the lever 17 raises the entire complex made up of the toothed wheels 9, the small shaft 32, and the cone 12, a complex which can slide vertically.

Cone 12 is thus in contact with the complementary conical cavity 15 of parts-carrying 13, thus causing it to rotate.

Two detectors 24 and 25 control the peripheral speed of the toothed wheel 9 and the seond toothing 16. When the peripheral speeds of the two toothings are almost equal, magnet 26 is activated.

The toggle joint 27 is opened, permitting the pivot 22 to rise.

The mechanism made up of the toothed wheels 8 and 7 is thus pushed up and causes the shifting of the toothed wheel 3 by means of the lid 3' which will engage with the teeth of the second toothing 16.

Toothed wheel 3 is kept in this position by the index 4 and 5. To facilitate the engagement of the toothed wheel 3 with the toothed wheel 16, toothing 2' presents one or more teeth (at least between one and five teeth) of the toothing 2 so as to create a slow relative speed between the two toothings 3 and 16 which helps the engagement.

The single-directional joint 11 makes it possible to compensate for the speed at the moment of coupling. When the toothings 3 and 16 are coupled, the synchronization device is returned to its initial position (Figure 2).

The parts-carrying body 13 therefore continues to rotate so long as the small shaft 4 is not pushed down.

## Claims

1. Mechanism for controlling the rotation of parts-carrying bodies (13) in automatic machines with revolving table (1), comprising:

a first toothing (2) made in the proximity of periphery of the parts-carrying table, below it and in one piece with it;

a second toothing (16) arranged along the periphery of each parts-carrying body (13) and in one piece with it;

an intermediate toothed wheel (3) idling on its shaft and arranged between the first toothing (2) and the second toothing (16) of each parts-carrying body, the intermediate wheel (3) constantly engaging with the first toothing (2) of the rotatable table which however can be shifted axially so as to be able to engage and disengage from the second toothing (16) when the parts-carrying body (13) must rotate, respectively, when it must remain fixed; the axial shift of said toothed intermediate wheel (3) is accomplished by making its axis (4) shift axially from an indexed position (4') of engagement to an indexed position (4") of nonengagement;

a third toothing (2'), similar to the first one (2), made in proximity of the periphery of the parts-carrying table and below it and controlling a synchronization device (7, 8, 9, 31, 12) making it possible to set in motion each fixed parts-carrying body in order to be able to couple its second toothing (16) to the first one (2) when said parts-carrying body must be made to rotate characterized by the fact that said synchronization device comprises the following:

an upper toothed wheel (7), identical to the intermediate idling wheel (3), engaging with said toothing (2') and connected, by means of a first vertical small shaft (31), to a lower toothed wheel (8), engaging in turn with a lower toothed wheel (9) of a second parallel small shaft (32) which is coaxial with respect to the parts-carrying body (13), the second small shaft (32) carrying at its top a cone (12) so made as to be friction-inserted in a complementary conical cavity (15) made underneath the parts-carrying body (13), a cone receiving the motion of the lower toothed wheel (9) through a single-directional joint (11);

at the base of the two small shafts (31 and 32) there is arranged a lever system (18, 33, 17) activated by a cam (20) and a tappet (19) to bring about the insertion or disinsertion of the cone (12) from the above-mentioned complementary cavity;

the end of said lever system (18, 33, 17) under the first small shaft (31) is connected to a toggle joint (27) which is activated by an electromagnet (26) to bring about the lifting of said first shaft and thus the translation of the axis (4) of the intermediate wheel (3) from it's indexed position of nonengagement (4") to the index position (4') of engagement, when the speed of the parts-carrying body (13) is close to that of synchronism.

2. Mechanism according to claim 1, characterized by the fact that the number of teeth of the third toothing (2') is between 1 and 5 teeth, in other words, less than that of the first toothing (2) in order to have a relative speed between the intermediate idle wheel (3) and the second toothing (16).

3. Mechanism according to claim 1, characterized by two detectors (24, 25) which control the peripheral speed, that of the second toothing (16) which is in one piece with the parts-carrying body (13), and that of the lower toothed wheel (9) of the second small shaft (32).

**Patentansprüche**

1. Vorrichtung zur Steuerung der Drehung von Teileträgern (13) in Automaten mit einem Drehtisch (1), die umfaßt:

eine erste, in der Nähe des Umfangs des Teileträgertisches sowie unter und in einem Stück mit diesem ausgebildete Verzahnung (12),

eine zweite, längs des Umfangs eines jeden Teileträgers (13) sowie in einem Stück mit diesem ausgestaltete Verzahnung (16),

ein auf seiner Welle mitlaufendes Zwischenzahnrad (3), das zwischen der ersten Verzahnung (2) sowie der zweiten Verzahnung (16) eines jeden Teileträgers angeordnet und ständig mit der ersten Verzahnung (2) des Drehtisches in Eingriff ist, das jedoch axial verschiebbar ist, um, wenn der Teileträger (13) drehen muß, mit der zweiten Verzahnung (16) in Eingriff, und wenn der Teileträger fest bleiben muß, mit dieser Verzahnung außer Eingriff zu kommen, wobei die axiale Verschiebung des Zwischenzahnrades (3) von einer Verlagerung seiner Achse (4) in axialer Richtung von einer Einrück-Schaltstellung (4') zu einer Ausrück Schaltstellung (4'') begleitet ist, und

eine zur ersten Verzahnung (2) gleichartige dritte Verzahnung (2'), die in der Nähe des Umfangs des Teileträgertisches sowe unter diesem ausgebildet ist und eine Synchronisationsvorrichtung (7, 8, 9, 31, 12) steuert, die es möglich macht, jeden festen Teileträger in Bewegung zu versetzen, um dessen zweite Verzahnung (16) mit der ersten Verzahnung (2), wenn der Teileträger gedreht werden muß, zu verbinden, dadurch gekennzeichnet,

daß die Sunchronisationsvorrichtung umfaßt:

ein oberes, zum Zwischenzahnrad (3) identisches Zahnrad (7), das mit der Verzahnung (2') in Eingriff ist und mittels einer ersten kleinen Vertikalwelle (31) mit einem unteren Zahnrad (8) verbunden ist, welches seinerseits mit einem unteren Zahnrad (9) einer zweiten kleinen Vertikalwelle (32), die zum Teileträger (13) koaxial angeordnet ist, kämmt, wobei die zweite kleine Welle (32) an ihrem oberen Ende einen die Bewegung des unteren Zahnrades (9) über ein Einweg-Verbindungselement (11) empfangenden Kegel (12) mit einer derartigen Ausbildung trägt, daß er unter Reibungswirkung in einen komplementären konischen, unter dem Teileträger (13) ausgestalteten Hohlraum (15) einsetzbar ist,

ein am unteren Teil der beiden kleinen Wellen (31 und 32) angeordnetes, durch einen Nocken (20) sowie einen Stößel (19) betätigtes, das Einsetzen und Lösen des Kegels (12) in den und aus dem genannten komplementären Hohlraum herbeiführendes Hebelsystem (18, 33, 17) und

eine durch einen Elektromagneten (26) betätigte Winkelverbindung (27), an die das unter der ersten kleinen Welle (31) befindliche Ende des Hebelsystem (18, 33, 17) angeschlossen ist, um das Anheben der ersten Welle und damit die Verlagerung der Achse (4) des Zwischenzahnrades (3) von seiner Ausrück-Schaltstellung (4'') in die Einruck-Schaltstellung (4') herbeizuführen, wenn die Geschwindigkeit des Teileträgers (13) derjenigen einer Synchronisation angenähert ist.

2. Einrichtung nach Anspruch 1, dadurch gekennzeichnet, daß die Anzahl der Zähne der dritten Verzahnung (2') zwischen einem Zahn und fünf Zähnen beträgt, d.h., geringer ist als die Zähnezahl der ersten Verzahnung (2), um eine Relativgeschwindigkeit zwischen dem Zwischenzahnrad (3) und der zweiten Verzahnung (16) zu erhalten.

3. Einrichtung nach Anspruch 1, gekennzeichnet durch zwei Fühler (24, 25), die die Umfangsgeschwindigkeit der zweiten, mit dem Teileträger (13) einstückigen Verzahnung sowie des unteren Zahnrades (9) der zweiten kleinen Welle (32) regeln.

**Revendications**

1. Mécanisme pour commander la rotation des porte-pièces (13) dans les machines automatiques à table tournante (1) comprenant:

une première denture (2) établie à proximité de la périphérie de la table porte-pièces au-dessous d'elle et en une pièce avec elle;

une seconde denture (16) disposée le long de la périphérie de chaque porte-pièces (13) et en une pièce avec lui;

une roue dentée intermédiaire (3) folle sur son axe et disposée entre la première denture (2) et la seconde denture (16) de chaque porte-pièces, la roue intermédiaire (3) engrenant constamment avec la première denture (2) de la table tournante tout en pouvant être déplacée axialement de façon à pouvoir engrener avec la seconde denture (16) quand le porte-pièces (13) doit tourner et à pouvoir s'en séparer quand ce porte-pièces doit rester fixe, le déplacement axial de ladite roue intermédiaire (3) s'effectuant par déplacement axial de son axe (4) d'une position indexée (4') d'engrènement à une position indexée (4'') de séparation;

une troisième denture (2') semblable à la première (2), établie à proximité de la périphérie de la table porte-pièces et au-dessous d'elle et commandant un dispositif de synchronisation (7, 8, 9, 31, 12) permettant de mettre en mouvement chaque porte-pièces pour pouvoir accoupler sa seconde denture (16) à la première quand ledit porte-pièces doit être mis en rotation;

caractérisé par le fait que ledit dispositif de synchronisation comprend la structure ci-après:

une roue dentée supérieure (7) identique à la roue folle intermédiaire (3) engrenant avec ladite denture (2') et reliée, au moyen d'un premier petit arbre vertical (31) à une roue dentée inférieure (8) engrenant à son tour avec une roue dentée inférieure (9) d'un second petit arbre parallèle (32) qui est coaxial au porte-pièces (13), le second petit arbre (32) portant à son extrémité supérieure un cône (12) établi pour être introduit pour contact à friction dans une cavité conique complémentaire (15) établie à la base du porte-pièces (13), un cône recevant le mouvement de la roue dentée inférieure (9) par l'intermédiaire d'un joint d'entraînement dans un seul sens (11);

à la base des deux petits arbres (31 et 32) sont disposés un système de leviers (18, 33, 17) activé par une came (20) et un poussoir (19) pour effectuer l'insertion ou le retrait du cône (12) de la cavité complémentaire mentionnée ci-dessus;

l'extrémité dudit système de leviers sous le premier petit arbre (31) est reliée à une genouillère (27) qui est activée par un électro-aimant (26) pour effectuer la montée dudit premier arbre et ainsi la translation de l'axe (4) de la roue intermédiaire (3) à partir de sa position indexée de non-accouplement (4") jusqu'à la position indexée (4') d'accouplement, quand la vitesse du porte-pièces (13) est proche de celle du synchronisme.

2. Mécanisme selon la revendication 1, caractérisé par le fait que le nombre de dents de la troisième denture (2') est inférieur de 1 à 5 dents au nombre de dents de la première denture (2) pour créer une vitesse relative entre la vitesse de la roue folle intermédiaire (3) et celle de la seconde denture (16).

3. Mécanisme selon la revendication 1, caractérisé par deux détecteurs (24, 25) qui contrôlent la vitesse périphérique, celle de la seconde denture (16) qui est en une pièce avec le porte-pièces (13) et celle de la roue dentée inférieure (9) du second petit arbre (32).

Fig.1

Fig. 2

Fig. 3

Fig. 4

4